# EUROPEAN PATENT SPECIFICATION

(11) **EP 0 264 674 B1**
(45) Date of publication and mention of the grant of the patent: **06.09.1995**
(21) Application number: 87114245.1
(22) Date of filing: 30.09.1987
(51) Int. Cl.: C22C 26/00, C04B 41/50, B22F 7/06, E21B 10/46, B23P 15/32, B24D 18/00, C09K 3/14

(54) **Low pressure bonding of PCD bodies and method**
Verbinden von polikristallinen Diamantformkörpern bei niedrigem Druck
Procédé pour lier des diamants polycristallins à basse pression

(30) Priority: 15.09.1987 US 95054; 20.10.1986 US 921364
(43) Date of publication of application: 27.04.1988
(73) Proprietor: BAKER-HUGHES INCORPORATED, Houston Texas 77210-4740 (US)
(72) Inventor: Sung, Chien-Min, Salt Lake City, UT 84070 (US); Chen, Sy-Hwa, Salt Lake City, UT 84121 (US)
(74) Representative: Diehl, Hermann O. Th., Dr.

(56) References cited:
- EP-A- 0 046 374
- BE-A- 460 350
- DE-A- 3 130 605
- FR-A- 1 482 372
- FR-A- 2 169 577
- US-A- 2 210 039
- PATENT ABSTRACTS OF JAPAN, vol. 9, no. 41 (C-267)[1764], 21 February 1985; & JP-A-59 184 792, 20-10-1984

## Description

### Field of Invention

The present invention relates to an improved synthetic diamond product and method of making the same and more particularly to an improved and novel temperature stable diamond assembly which may be of a variety of sizes, shapes, and thickness, the diamond assembly being formed by an improved and novel bonding method which does not require the comparatively high temperatures and pressures normally used in the synthesis of synthetic diamond products thus to provide a diamond assembly which may be relatively large and in which the diamond, preferably in the form of a temperature stable synthetic polycrystalline diamond, is firmly and chemically bonded on or to a support structure.

### Background of the Invention

Various types of synthetic diamond products are known and commercially available. Typically such products are used industrially for material removal purposes, for example, drilling products such as core bits, mining bits, drilling bits for oil and gas, saw products, cutting tools, grinding wheels, and products such as wire-drawing and extruding dies, bearing surfaces, dressers, lead bonding tools and abrasives.

These synthetic diamond materials may vary somewhat in their character, one being an unleached polycrystalline product having a temperature stability of up to about 700-750 degrees C., see United States Patents 3,745,623 and 3,608,818. This synthetic diamond product itself is usually formed by diamond-to-diamond bonds and is carried on a substrate which may be cemented tungsten carbide, for example. The substrate is usually preformed and contains cobalt, the diamond product being formed and affixed to the substrate at very high temperatures and pressures, usually referred to as the diamond stable region of temperature and pressure, as set forth in prior patents and other literature, and typically above 50 kbar and at a temperature above about 1,200 degrees C.

In this processing the cobalt in the substrate is used as a binder for the tungsten carbide and as a solvent/catalyst for the formation of diamond-to-diamond bonds. The presence of cobalt results in somewhat limited temperature stability of the diamond as noted. It is not uncommon to refer to these products as polycrystalline diamond products (PCD) as contrasted to single crystal diamonds.

PCD elements offer the advantage that upon fracture, only a relatively small fragment of the PCD element is lost as compared to a single crystal diamond in which fracture takes place along a plane with the possibility of losing a relatively large piece of the diamond.

Unleached PCD elements may be formed with the high temperature and high pressure apparatus as disclosed, for example, in United States Patent 2,941,248. PCD products thus far described are available in various sizes and shapes, for example circular, half-circles, quarter round, square, rectangular, half-rounds with a pointed section, and the like. The PCD face or disc, joined to a backing member of tungsten carbide or the like is sometimes mounted, by brazing, on a steel tool body or tungsten carbide slug support. The PCD materials may be as small as several millimeters to as large as 50 millimeters in diameter, see for example United States Patent Application Serial Number 906,169 US-A-4 883 136 US-A-4 913 244, filed September 11, 1986, and assigned to the same assignee (CHP 6149).

Inclusions such as cobalt, iron or nickel present in unleached PCD elements as residual materials initially used as solvents/catalysts in the synthesis of the PCD tend to reduce the temperature stability of the PCD to well below 1,200 degrees C., for example, to about 750 degrees C.

The fabrication of the larger diameter materials requires rather large and expensive processing equipment capable of generating high pressures and temperatures. The temperatures and pressures are those in the diamond forming region of the phase diagram for carbon, see for example United States Patents 4,108,614 and 4,411,672. The length of the substrate or backing is a limitation since the processing equipment must be capable of fabricating a diamond facing on a rather long piece which takes up room in the press. The result is that in at least one instance, the length of the backing, axially to the rear of the PCD face, is rather short and after formation, a longer tungsten carbide member or member of other material is attached to the formed product by any one of several well known procedures, and as described in United States Patent 4,200,159, for example.

In one typical use of these products, for example in oil and gas drilling bits and core bits, the usual practice is to form the bit body and thereafter to mount the PCD cutting element in the bit body. The bit body may be steel and the PCD cutter is a slug type cutter which is press fitted into apertures in the bit body. These procedures are well known. The difficulty with the use of steel bodies is that the body and/or the cutter assembly may be subject to erosion by the relatively abrasive flow of the drilling fluid used to clean and cool the bit. Thus, the practice has been to hard face the steel body or to use a carbide slug. In the case of matrix body bits which offer erosion resistance, the practice has been to mount the PCD cutter, normally having an added backing or of a sufficiently long length integrally formed as one piece, by brazing the cutter to the matrix body. One of the problems associated with this procedure, in addition to the increased cost, is the desire to use a relatively high temperature braze material and the need to keep the PCD face cool to prevent thermal damage (above about 750 degrees C.) to the cutter face during the brazing operation. Even so, a large number of bits have been made as described by a variety of bit manufacturers.

Another commercially available form of PCD, sold under the mark GEOSET®, is an unbacked leached product, see United States Patents 4,224,380 and 4,288,248, which has a temperature stability of up to 1,200 degrees C., but which may have a porosity of up to about 15% and may not be as impact resistant as desired in a particular application. The temperature stability of these PCD products offers the advantage that they can be processed during the infiltration of the matrix material used to form the bit body and may be exposed to the relatively high temperatures used during the infiltration procedure without degradation of the PCD, thus eliminating the need for brazing. In general, temperature stability is also an advantage in the cutting action of the PCD during use. For the purposes of this invention, temperature stability means that the PCD element, regardless of type, is stable to about 1,200 degrees C. without significant deterioration in its properties and will be referred to herein as TSPCD. Typical temperature stable leached PCD material is available under the trademark GEOSET®, which obtains porosity.

Temperature stable PCD elements are known which are not porous and are not leached. A typical such material, available under the trademark SYNDAX-3® is a PCD in which silicon is present in the form of silicon carbide.

Significantly, the TSPCD materials are not commercially available as backed products, as contrasted to the previously described low temperature products. The TSPCD materials are available as unbacked materials in a wide variety of shapes and sizes, for example, triangular, square, cylindrical with flat ends or pointed at one end, round discs, rectangular, ovoid, and the like. These products may also be cut to form other shapes by using a laser or other means.

While temperature stability is not required in all uses, there are many applications in which it is required. Further, there are processing steps such as brazing in which the PCD part may be exposed to temperatures above 750 degrees C. In these instances it is necessary to cool the PCD part or to otherwise prevent it from being exposed to the higher temperature. As a result, there are limitations in the processing of such unstable PCD products which tend to limit the use thereof.

TSPCD elements, are available in a limited range of sizes that are generally too small for individual use in many applications. To overcome this problem, TSPCD elements have been formed into a mosaic type of structure in which the individual TSPCD elements are mounted and mechanically affixed in a support structure, e.g., a hot-pressed segment or the like.

While these mosaic structures have been operated satisfactorily and provide a large PCD cutter having temperature stability, the mosaic elements lack the advantages of the large one piece PCD cutters (up to 50 mm diameter or more) which are not temperature stable but which have been used in oil and gas drill bits and core bits. Even though the bits using the mosaic cutters avoid the necessity of having to braze the mosaic into the matrix of the bit, the mosaic cutters do not function as a large one piece PCD with the result that the individual mechanically mounted TSPCD elements can be broken free of the supporting structure. A mechanical type of mounting also limits the shape and size and contour of the cutter, even though the assembly is temperature stable.

Another problem with mosaic cutters is that bending stresses tend to cause release of the mechanically mounted TSPCD elements. Moreover, unlike a large integral brazed PCD cutter of the same size in which only small portions of the PCD are fractured off during use, the tendency in the mosaic cutters is to release the TSPCD elements as the supporting structure around the TSPCD is abraded away and support for the TSPCD is reduced, i.e., the individual TSPCD element is lost rather than losing on a small fragment.

In general there is a need for a TSPCD containing product in which one or more TSPCD elements are firmly anchored or locked into or mounted on a suitable support, which optionally may be mounted to another structure. It is desirable to mount one or more of such TSPCD elements by more than merely a mechanical mounting, and preferably it is desired that the mounting be by a firm chemical bond.

United States Patent 3,650,714 of March 21, 1972, issued to Farkas, describes a method for coating natural single crystal diamond particles in the range of 74 to 58 »m (200 to 250 mesh) with either titanium or zirconium. The coating is applied from dry powder, the resultant material is then heated in a graphite mold, under vacuum conditions for between 10 to 15 minutes at a temperature in the range of 850 to 900 degrees C. The relatively low temperature of heating to form a carbide at the interface indicates that the titanium or zirconium coating is quite thin. The result is said to be a coated diamond particle in which the coating is about 5% by weight of the resultant product and in which a carbide is formed at the interface, with the outer surface of the coating being non-carbided. The calculated thickness of the coating is about 0.445 of a micrometer for 74 »m (200 mesh) material and 0.344 of a micrometer for 58 »m (250 mesh) material. Since subsequent processing in an oxidizing atmosphere would result in the formation of an oxide which is not easily wetted by other materials, the coated natural diamond particles are overcoated with either nickel or copper with a film thickness of between 50.8 and 127 micrometer thick (between 0.002 and 0.005 of an inch). This outer coating is said to serve as a protective coating to prevent oxidation of the titanium or zirconium or their carbides during subsequent processing under oxidizing conditions. The subsequent processing described is hot or cold pressing and subsequent sintering or infiltration with brazing alloys.

An important difficulty with the above procedure and the resulting product is that the carbide containing coating is quite thin, substantially less than one micron, with the result that under certain types of subsequent processing such as with the use of liquid binders in infiltration, as for example in the formation of an infiltrated matrix for earth boring bits, the liquid binder penetrates the protective coating and the relatively thin carbide containing coating. The problem would be particularly acute with PCD elements since their surface is rather "rocky" and irregular and includes a certain amount of surface porosity. Thin coatings such as described in Farkas would contain substantial imperfections and voids that would permit the liquid infiltrating binde to attack the carbide interface between the PCD and the coating and to separate the coating from the PCD. In addition, the processing of such coated diamonds, whether PCD elements or natural, in an oxidizing atmosphere is not practical since any imperfection or dissolution of the outer nickel or copper coating, for instance by the action of the liquid binder, would result in the oxidation and destruction of the underlining titanium and titanium carbide layer.

Also known in the prior art are products which might generically referred to as diamond impregnated products. Typically these products are composed of natural or synthetic diamond particles which may be of a variety of mesh sizes. Whereas a large integral PCD element may be between 70% and 97% by volume of diamond material, depending upon the processing, the amount of residual inclusions or porosity, the impregnated products generally have a much lower volume percent of diamond, typically less than 40%. The result is that the impregnated product performs better as an abrasive or cutting element than does the same material without the diamond grit, but the problem is that the small diamond particles are easily lost as the surrounding supporting structure is abraded away. To improve the retention of the diamond grit in the supporting structure it has been proposed to coat the particles of the grit with various metals such as tungsten, tantalum, columbium, niobium or molybdenum, and the like by chemical vapor deposition techniques using a fluidized bed procedure, see for example United States patents 3,871,840 and 3,841,852. The products there described are about 25% by volume of diamond grit of particle size from 420 to 149 »m (40 to 100 mesh) and represent an improved impregnated product in contrast to in improved large diamond product. The coated diamond grit is formed into various shapes by a hot pressing procedure or by infiltration at an elevated temperature.

Coatings have also been used to form diamond products as contrasted to impregnated products. For example, United States Patent 3,879,901 describes the vacuum deposition of a metal such as molybdenum or titanium on diamond materials with subsequent processing at 60 kbar and between 1,200 and 1,400 degrees C to form a diamond product in contrast to a diamond impregnated product. In another instance, see United States Patent 4,378,975, an abrasive body with diamond is formed by forming a green body by cold pressing with a nickel based alloy. The green body is then sintered at 950 degrees C. with a diamond volume of between 10% and 40 % by volume.

It is also known in the sintering of synthetic diamond to use a thin coating of between 30 and 600 nm. (300 and 6,000 Angstroms) of a strong carbide former, with a second coating of cooper with subsequent processing at 5 kbar at a temperature of 600 to 700 degrees C. in an inert atmosphere, see United States Patent 3,356,473. In United States Patent 3,464,894 it is proposed to form a chemically bonded coating of titanium such that a titanium-carbon bond is formed followed by processing at a pressure of 62821 Bar (62,000 atmospheres of pressure).

In US-A 2 210 039 a method is disclosed in which a mass of diamond pieces and tungsten metal powder is heated substantially by itself at a temperature in general below 1149°C for a period of time sufficient to form a film or layer containing tungsten metal and tungsten carbide. In a further separate step the mass of metallic tungsten particles and diamonds having a layer of tungsten metal and tungsten carbide is heated to a temperature in the neighbourhood of 1149°C in contact with a brazing material such as German silver having a melting temperature below that temperature so that the brazing material is caused to melt and flow by capillary action into the interstices of the mass to bond the whole together. This achieves a bond between the tungsten carbide and tungsten metal containing surface layer on the diamonds and the particles of tungsten metal and between the tungsten metal particles themselves.

In FR-A 2 169 577 an abrasive product is disclosed which contains different groups of abrasive particles--a group of particles of greater hardness i.e. diamond particles, a group of other particles selected from alumina, tungsten carbide or silicon carbide--which are surrounded by a metallic matrix of a brazing material. The diamonds and preferably also other abrasive particles after having been surface treated are covered with a layer of tungsten, tantal, niobium or molybdenum whereby the thickness of a tungsten layer on diamond is reported as being about 2.5 to 25 »m. The covered and uncovered abrasive particles are granulated with a brazing metal powder, preferably of the bronze type having a melting point below 1090°C or powders of other brazing metals having a melting point below 835°C, to form little spheres or balls containing the abrasive grains inside and being covered with a shell of powder. A die is filled with these spheres or balls, further pulverised brazing metal powder is added and by means of infiltration or hot pressing the abrasive products are made. The brazing material is mentioned to provide a metallurgical bond to the cover of the covered abrasive particles.

In general, the coating procedures of the prior art are related to pretreatment of diamond forming materials which are thereafter processed at relatively high temperatures and pressures to form a diamond element or to form a coating on diamond grit used to form an impregnated product in which the volume of diamond is well below about 50% by volume.

The provision of improved methods for the fabrication of large TSPCD products, which are temperature stable in the range of about 1,200 degrees C. and which may be fabricated at lower pressures and temperatures than have been used in the synthesis of diamond products, would have unique advantages. For example, the cost for fabrication equipment is vastly reduced as well as the cost for each of the products. The ability to fabricate various shapes and sizes and thickness, i.e., to be free of the shape and size limitations of high-temperature and high pressure equipment, would also offer advantages from a processing and application point of view.

One of the significant advantages of the present invention is the ability to fabricate a TSPCD product of a particular configuration and in which the TSPCD starting element or elements are firmly anchored in place. For example, the use of a TSPCD structure in accordance with this invention in various types of cutting tools and lead bond tools as may be used in semiconductor chip processing to form electrical connections to the chip elements through accurate control and positioning of a heated TSPCD faced lead bond tool, or in diamond tracing tools, for example, offers unique advantages as compared to current practices.

Thus, it is an object of this invention to provide a temperature stable diamond product of various sizes and shapes and capable of being used in various products, but which is substantially less expensive than the diamond products currently available and which may be firmly bonded to a supporting structure. This object is solved by independent claim 1. Further advantageous features and aspects are solved by the dependent claims.

Another object of this invention is to provide an improved and novel process using relatively low temperatures and pressures for the fabrication of a diamond product from smaller temperature stable diamond elements in which the diamond product is temperature stable. This object is solved by the method of independent claim 16. Further advantageous features and aspects are evident from the dependent method claims.

Still another aspect of this invention is the provision of an improved relatively low temperature and relatively low pressure process for the formation of a temperature stable diamond product.

Yet another aspect of this invention is the provision of an improved temperature stable diamond cutting element for us in earth boring and core bits which is less expensive than comparable sized elements and which may be fabricated at relatively low temperatures and pressures into shapes and sizes not presently economically feasible.

It is also an aspect of this invention to provide a more effective method and means of attaching a temperature stable PCD to a tool or supporting body.

Another aspect of this invention is to bond TSPCD elements by a chemical bond so that they can be firmly attached to a tool body.

Yet another aspect of this invention is to bond TSPCD elements to form a specific pattern of cutting elements so that the wear mechanism, such as regenerating sharp cutting edges as the cutter wears, can be controlled.

It is also an aspect of this invention to form an improved diamond product in which the bonded PCD pieces form an integral part rather than a collection of individual elements.

It is also an aspect of this invention to provide a strong substrate backing to TSPCD, in which the properties of the backing can be adjusted to suit specific applications.

### Brief Description of the Invention

In accordance with the present invention, a temperature stable synthetic polycrystalline diamond (PCD) product is provided which is fabricated from smaller TSPCD elements by improved relatively low pressure and low temperature procedures.

In general the products of the present invention may be formed by either liquid state infiltration or solid state sintering to affix a relatively thin PCD element on a hard ceramic substrate. The method includes the common steps of coating a temperature stable polycrystalline diamond element with a selected carbide former, preferably one which is stable against oxidation, arranging the coated elements in a mold in a predetermined relation with each other. Thereafter, a hard ceramic powder such as tungsten carbide powder containing an organic binder is placed over and around the assembled coated TSPCD elements. The powder is preferably monosized.

The resulting assembly is cold pressed to compact the powder to about 50 volume percent. The thus pressed assembly is optionally cold isostatic pressed to increase the volume percentage of the powder to about 60-65%. The cold isostatic pressed part has sufficient integrity to be handled and machined, if that is needed.

Thereafter if liquid state infiltration is used, the formed part is first heated to vaporize off the organic binder and then infiltrated preferably in a vacuum or under inert or reducing atmosphere with a metal binder which melts and fills the voids and binds it together.

The metal binder is preferably one which has a melting point within the temperature stable range of the TSPCD and which possesses strength and toughness. In this operation, the coated TSPCD elements are bonded together into a unitary assembly of a TSPCD. The infiltration is carried out at a temperature below the thermal degradation temperature of the TSPCD elements, above the melting point of the binder, and below the melting point of the metal of the coating. The heating is controlled to promote formation of a relatively thin carbide layer on that portion of the surface of the TSPCD which has been coated by the carbide former. During the controlled heating, under carbide forming conditions, carbon diffuses from the PCD into the coating to form a carbide.

During the heating, it is believed that the temperature used to form the carbide is more important than the rate of heating. The evidence suggests, in the case of a tungsten coating for example, that the coating on the diamond can form a carbide above about 950 degrees C.and preferably at about 1,100 degrees C. no matter how fast the heating is conducted. Thus, heating at 1,100 degrees C. for about 15 minutes is normally sufficient. A longer time of heating at 1,100 degrees C. can increase the thickness of the carbide, but in general longer heating periods at high temperatures may damage the diamond because of too much carbide formation and results in an ineffective chemical bond being formed. If the heating is excessive, the result is that more and more of the carbon from the TSPCD diffuses into the coating with possible damage to the PCD. Thus, while the dimension of the thickness of the coating of the carbide forming metal may vary within wide limits, the dimension of the carbide coating, for a single coating which is stable against oxidation, such as tungsten, should be in the range of between 1 and 10 »m.

The resulting product of the invention has a chemical bond from the TSPCD to the coating to the matrix carrier. The term "matrix carrier" as used herein describes the powder and binder material which is placed around or in contact with the TSPCD element or elements and which is processed in accordance with this disclosure.

A solid state sintering operation (also referred to as tungsten powder activated sintering) may also be used to bind the TSPCD element to the matrix carrier. This operation involves vacuum sintering or sintering in a controlled atmosphere or hot pressing or hot isostatic pressing of the cold pressed part. If processed by solid state sintering, the materials used for coating and for the backing and the like have to be adjusted to reflect the different but related processing. Here again, if the formation of the carbide layer is simultaneous with the sintering operation, the heating is such that a relatively thin carbide layer is formed. Since this form of processing does not use a binder for matrix carrier formation, a portion of the coating wets the powder and bonds to the powder during sintering, again forming the chemical bond described.

Various shapes and sizes may be formed in accordance with the present invention, and the testing thereof indicates that the bond between adjacent TSPCD elements is stronger than that which may be achieved through merely mechanical mounting of the TSPCD part or parts in a support matrix carrier.

The methods described above permit the formation of a wide variety of shaped cutting elements for use in various cutting and abrading devices. Large and shaped diamond bearings may be fabricated. The larger or shaped TSPCD product of this invention may be processed with a backing or supporting element of a variety of shapes and configurations and compositions. Relative thick and shaped TSPCD products may be fabricated at relatively low pressures and temperatures. In general, however, the principal advantage of this invention is the ability to provide a TSPCD structure in which one or more TSPCD elements are firmly anchored in a support structure by a bond which is significantly stronger than a mere mechanical mounting.

### Brief Description of the Drawings

Figure 1 is a flow chart depicting the steps in formation of a TSPCD product in accordance with the present invention;
Figure 2 is a plan view of one form of a TSPCD product in accordance with the present invention;
Figure 3 is a side view as seen along the line 3-3 of Figure 2;
Figure 4 is an enlarged fragmentary view illustrating she bonding path between adjacent TSPCD elements in accordance with this invention;
Figure 5 is a view in perspective of a TSPCD product having a single TSPCD element in accordance with this invention;
Figure 6 is a plan view of one form of bearing in accordance with this invention;
Figure 6a is a sectional view taken along the line 6a-6a of Figure 6;
Figure 7 is a view in perspective of a dressing tool in accordance with the present invention;
Figure 8 is a plan view of a saw blade segment in accordance with this invention;
Figure 8a is a sectional view as seen along the line 8a-8a of Figure 8;
Figure 9 is a sectional view of a lead bonding tool in accordance with this invention;
Figure 10 is a plan view of a TSPCD product in accordance with this invention in which a multiplicity of individual elements are bonded together into a larger TSPCD structure;
Figure 11 is a perspective view of another form of TSPCD product in accordance with this invention;
Figure 11a is a view, partly in section and partly in elevation, illustrating the mounting and use of the product illustrated in Figure 11;
Figures 12a to 12d are diagrammatic views of various structures and the test protocol for three point testing;
Figure 13 is a view in perspective of another form of TSPCD product in accordance with this invention;
Figure 13a is a view similar to that of Figure 13 but illustrating a modified form of product in accordance with this invention;
Figure 14 is a view in section illustrating still another form of product in accordance with this invention;
Figure 15 is a view, in perspective, of a twist drill in accordance with the present invention;
Figure 16 is a view in perspective of still another product in accordance with this invention;
Figure 17 is a perspective view of one form of earth boring bit in accordance with this invention, and
Figure 18 is an enlarged fragmentary view of the cutters illustrated in Figure 17 and produced in accordance with this invention.

### Detailed Description of the Invention

In accordance with this invention the starting diamond material is preferably a temperature stable polycrystalline diamond material composed of aggregate diamond particles having a size in the range of submicron to over 100 »m, for example, although the particle sizes need not be uniform; i.e., mixtures of particles of the sizes indicated may be used as is known in the art. The TSPCD should contain at least 60% by volume of diamond aggregates, as described, and the product may be leached or unleached with some diamond to diamond bonding or diamond to metal bonding in the assembly. For products to be used in cutting or abrasive operations where the surface finish of the cut or abraded part is important, it is preferred that the smaller particles of diamond be used, for example, below about 15 »m. By way of example, wire drawing dies may require smaller particle sizes in order to provide a certain surface finish on the drawn wire product.

The TSPCD element may be as small as 250 »m., (i.e., 10 mils) on an edge and as large as one carat or more. It is preferred that the edge length of the starting TSPCD be above 1,000 »m. (i.e., one millimeter) since pieces of this size are easier to manipulate or handle. Typically, TSPCD elements of a size of three pieces per carat (0.165 of an inch per side triangles) are easily handled.

In some instances the smaller particle sizes of TSPCD material below 250 »m. may be used as a grit in the material used to bind the larger TSPCD elements described in order to provide an impregnated support or to increase the amount of diamond material between adjacent larger TSPCD elements.

It is preferred that the TSPCD starting material be of a regular geometrical shape which may be any of the shapes already mentioned. The principal reason for a fixed and known geometrical shape is that it vastly simplifies the arrangement of the TSPCD elements in the desired relationship for processing and thus offers maximum control of placement, spacing and overall configuration and content of the final part. Since one of the advantages of the present invention is the ability to form large TSPCD structures, it is also preferred that the geometrical shape be such that the TSPCD starting elements have side surfaces or faces which can be positioned in a close and controlled spacing to an adjacent TSPCD element, e.g., triangular, square, rectangular and the like, it being understood, as will be discussed in detail, that a TSPCD structure may include TSPCD elements of different geometrical configurations.

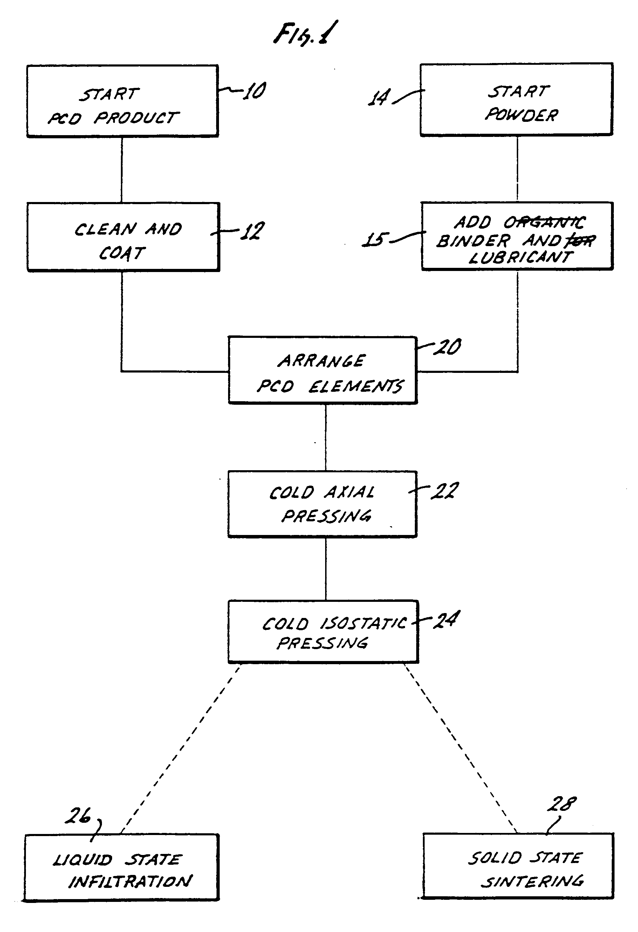

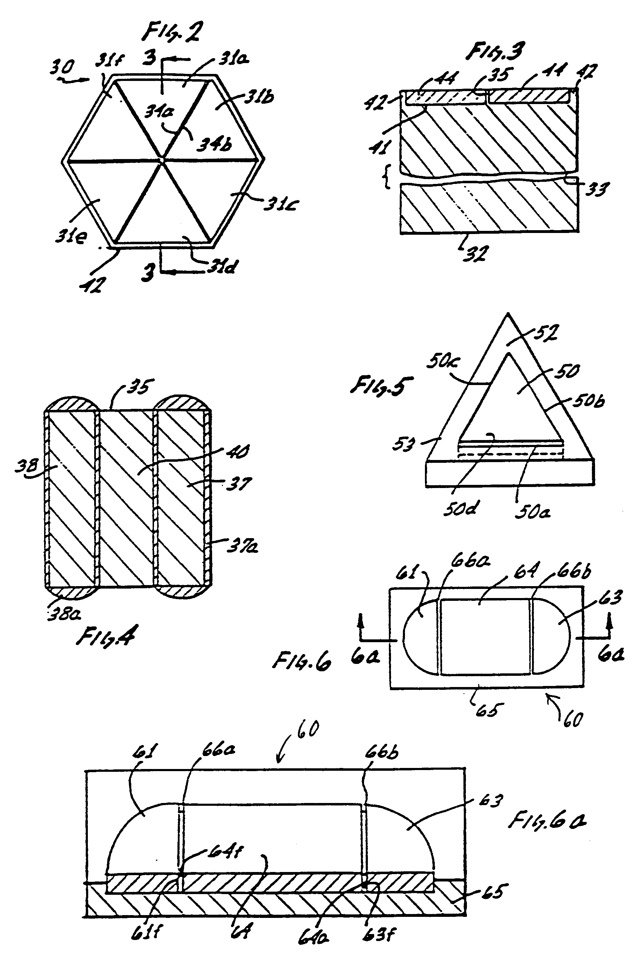

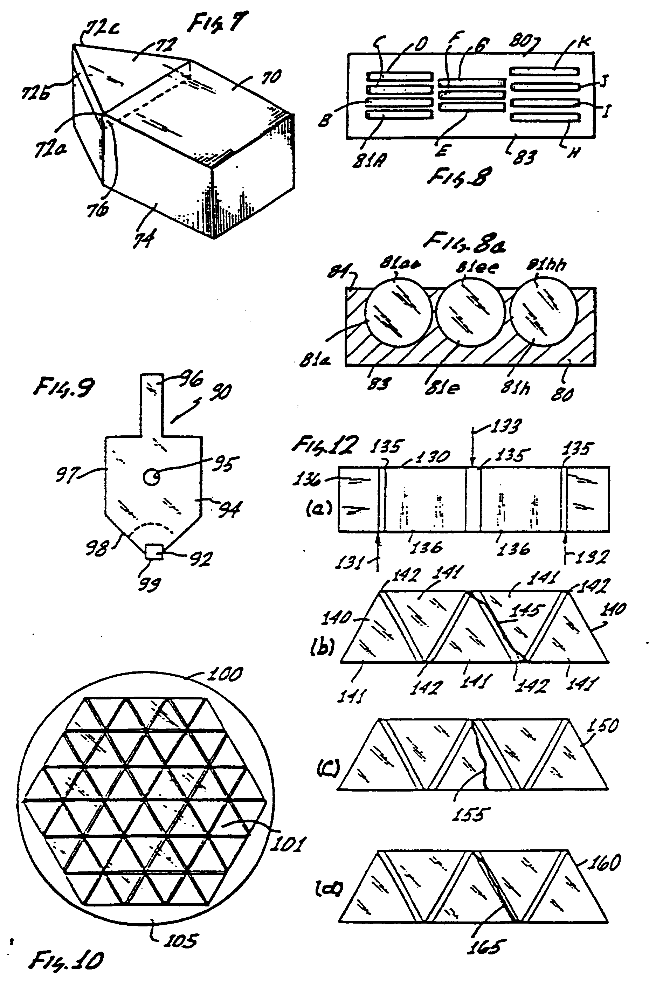

In the processing in accordance with this invention, as diagrammatically illustrated in the flow chart of Figure 1, the starting TSPCD material 10 is preferably cleaned by heating in hydrogen at about 800 to 1,000 degrees C. for about 10 to 60 minutes as indicated at 12. Other cleaning procedures may be used provided they are effective to remove oxidants and other surface contaminants. Thereafter the cleaned TSPCD material is surface coated with a metal by any one of several known procedures.

Such a coating procedure is chemical vapor deposition by which a metal compound such as a chloride or a fluoride is heated to decompose the compound to form a mist of the metal which then deposits on the TSPCD material.

Besides tungsten, there may be used any metals of the Group IVA, VA, VIA, VIIA metals and alloys and mixtures thereof and silicon, such as tantalum, molybdenum, titanium, niobium, vanadium, zirconium, manganese, molybdenum/manganese, or tungsten/manganese. As a class, these materials have a melting point higher than the temperatures used in subsequent processing and are strong carbide formers and form a strong bond to the diamond. Metals of Group VIIIA, such as cobalt, iron and nickel are less preferable because of the tendency to weaken the TSPCD by back conversion of the diamond or possibly by other means. Zirconium and titanium have been observed to have a volume expansion in response to elevated temperatures which is more than that of diamond but less than that of cobalt and iron.

For chemical vapor deposition one may use the hexahalides, tetrahalides, pentahalides, e.g., the hexa-, tetra- and penta- forms of the bromides, chlorides, fluorides of the metals mentioned. The thickness of the coating on the TSPCD may vary from 1 to 10 »m.

The application of the coating does not necessarily result in a chemical bond to the TSPCD at this point in the processing. As near as has been determined, the processing temperature used in chemical vapor deposition is not sufficiently high to form a chemical bond as indicated by the essential absence of any diffused carbon into the metal of the coating and the absence of any metal of the coating being diffused into the TSPCD. While it is believed that the coating is essentially uniform in dimension and essentially covers the entire outer exposed surface of the TSPCD, it is not essential to form a continuous coating. In the case of porous leached TSPCD elements, the coating should be thick enough to bridge over the pores in the TSPCD surface so that it is effectively coated with the metal.

An important advantage of this invention is the ability to form a backing or supporting structure for the TSPCD elements of widely varying configuration and composition. The backing is formed in situ as the TSPCD elements are bonded chemically together and to the support structure.

To assist in handling, it is preferred to compress the powder and the TSPCD elements in an axial compression operation. Ultimately the backing or support structure will achieve a volume percentage of metal or metal carbide or abrasive particle (e.g., carbides) which is in the range of 40% to 80%. Optionally, the compacted structure may be further compressed by isostatic pressing in which the volume percentage is increased to about 60% to 90%. If the structure is to be sintered, isostatic pressing is preferred.

The hard ceramic powders used to form the matrix carrier may be metal carbide such as tungsten carbide, titanium carbide, tantalum carbide, molybdenum carbide, and cemented tungsten carbide (tungsten carbide cemented with cobalt).

The particular powder used and the particle size or sizes is related to the desired volume percent of the matrix powder, the final product which in turn is related to the hardness (rigidity) and impact resistance (toughness) of the backing or support structure. Also a consideration is the type of processing, e.g., liquid state infiltration or solid state sintering.

In the case of liquid state infiltration, the hard ceramic powder, for example tungsten carbide, has a particle size which is typically., below 44 »m (Standard), (below 325 mesh (Tyler)), for example 30 »m. The size distribution and the percentage distribution may vary depending upon the supplier. However, the size may also be varied. For example the same packing efficiency may be obtained by appropriate selection of particle sizes, e.g., 30 »m. and 6 »m. in a ratio of 70% to 30%.

In the case of solid state sintering, for example using a tungsten powder, the powder particles are preferably coated with a metal such as nickel, for example 0.35 weight percent. This may be done by mixing tungsten powder of a particle size of 0.5 »m with a solution of nickel nitrate in alcohol, followed by heating at about 90 degrees C to evaporate the alcohol with the result that the nickel nitrate is deposited on the tungsten powder. The nickel nitrate coated tungsten powder was then heated at 800 degrees C for 3 hours in a reducing atmosphere (hydrogen) to eliminate the nitrate. The processed tungsten powder was then ball milled for 24 hours using tungsten rods as the milling media and then sieved and screened to 74 »m (200 mesh). The purpose of the nickel, as will be described, is to act as a diffusion activator for the tungsten. Other binder materials which may be used are tantalum, molybdenum, and nickel based alloys, copper-nickel alloys and cobalt based alloys.

In either liquid state infiltration or solid state sintering, the appropriate powder of the appropriate particle size or sizes is mixed with a temporary binder material which is preferably an organic material as indicated at 15. The temporary binder is used to coat the powder material to form a temporary adhesive bond between the powder particles during the initial compression step. Since this temporary binder remains in the processed product through the cold isostatic pressing operation, it should preferably be a material which is present in a relatively low volume percentage. If the volume percentage of the temporary binder needed to achieve a temporary bond is too high, this may affect the volume percentage of the powder in the final product, i.e, too great an amount of the temporary binder may prevent the achievement of higher powder volume percentages. Various organic polymeric or resinous binders which are easily volatilized at elevated temperature may be used.

It is also desirable to use a lubricant which may be volatilized completely at elevated temperatures in order to facilitate powder movement during the various pressing operations, especially the optional cold isostatic pressing operation. One such material is mineral oil which may also be dissolved with the temporary binder to coat the powder.

The powder is dispersed into the solution of the temporary binder and lubricant and the binder and lubricant coat the powder which is then dried and reground into a powder. Other coating procedures may be used as is known in the art.

The next step in the sequence, as indicated at 20, is to arrange the coated TSPCD elements in the desired relationship as needed to form a product. If the product is to contain multiple TSPCD elements it is preferred to use a template or die configured to position the TSPCD elements with respect to each other. The spacing between adjacent TSPCD elements may vary widely, depending upon the configuration and nature of the final product. Where the part includes multiple TSPCD pieces, the side faces of the TSPCD elements may be spaced from each other to provide a gap of from about less than 25 to 12500 »m (1 mil to 500 mils) and preferably in the range of 150 to 750 »m, (6 to about 30 mils), by way of example. Thereafter, the processed powder is placed in the gaps between the adjacent TSPCD pieces and filled in in contact with the surfaces of the TSPCD elements.

In some instances it is not necessary to form a gap as described since the TSPCD may be assembled with adjacent surface portions in contact with each other. In this instance, where liquid state infiltration is used, the binder penetrates between the TSPCD elements and chemically bonds the adjacent coated TSPCD elements together. Such a butting arrangement of the TSPCD's may be used where erosion is not a potential problem, e.g., in bearings, saw blades and wire dies and the like, for example. Where erosion is likely to be a problem, such as exposure to relatively high velocity flow or the use of abrasive materials, the use of a gap in which powder is present is preferred for erosion resistance.

The thus assembled TSPCD-powder temporary assembly is then assembled into a pressure die of suitable configuration which preferably defines the outside contour of the finished part. One manner of carrying this out is to use an open ended die, invert the die and move the temporary assembly of TSPCD elements up into the bottom of the die, re-invert the die right side up so that the assembly is in the bottom of the die and then add the processed powder material to the required volume. The amount of powder added is related to the thickness of the support or backing and the volume percentage of the metal in the final product.

The assembled material is then axially cold compressed in the die, as indicated at 22, at a pressure of between 7.03 to 21.09 kg/mm² (10,000 psi and 30,000 psi) to increase the tungsten carbide packing density to about 50 to 65 volume percent. As a result of this processing, a compacted intermediate is formed which is fragile but still capable of being handled with care. As another example, if the subsequent processing is solid state sintering, pressures around 7.03 kg/mm² (10,000 psi) may be used and the resultant product has a packing density of about 50 volume percent.

An additional step in the processing is the cold isostatic pressing operation, as shown at 24, in which the compacted intermediate is isostatically cold pressed at a pressure of up to about 21.09 kg/mm² (30,000 psi) for five minutes or longer, for example. The isostatic pressing typically achieves a tungsten carbide packing density of about 62 volume percent. In the case of tungsten powder in solid state sintering, the density is about 65 volume percent. During this operation, the tungsten or the carbide powders are moved and compacted uniformly to a more dense product.

At this point in the processing, two alternate processing routes are available, as indicated in the dotted lines of Figure 1, liquid state infiltration, as seen at 26 or solid state sintering as seen at 28.

In the case of solid state sintering, the product of the isostatic pressing is sintered in a vacuum furnace at 1,33·10⁻⁵ mbar (10 to the minus 5 torr). at 1,200 degrees C for about 1 hour. The result is a sintered product having a density of about 90 volume percent. The finished product indicates a bond between the tungsten material with the tungsten coating on the TSPCD, i.e., a tungsten-tungsten metal bond. The nickel or other activator is used to promote diffusion and metallurgical bonding. The mechanical properties of this bond are quite strong, and the finished product, although somewhat brittle is quite useable.

There are, however, some limitations of solid state sintering. For example, the limitation of sintering at a temperature below 1,200 degrees C renders it difficult to find a material with high strength and high modulus. Even if the high modulus materials can be sintered below about 1,200 degrees C, as by activation sintering, the sintered product may contain 5% or more porosity which may act as pre-existing cracks. While this may not be a problem in some cases, it is a consideration where the finished part is in a part which is subject to relatively high impact loads, e.g. a drill bit for example.

In those instances in which the bonded TSPCD product is to be mounted to a high modulus backing, the processing may involve two thermal cycles to bond the TSPCD product to a tungsten carbide back-up element. While effective, the processing steps increase the costs.

Even though these problems exist, the advantage of this form of processing is the ability to provide a high strength, low thermal expansion material to bond the TSPCD together. There are known ductile materials which may be added to the powder or the binder in accordance with this invention to decrease the brittleness of the sintered matrix carrier.

It is preferred to use liquid phase infiltration as the last process step. In this processing, the product from the isostatic pressing operation is heated to cause a metal binder to flow through the compacted powder and bind it together and to the TSPCD elements.

Regardless of the type of processing as herein described, the hard ceramic powder in the matrix carrier can be of relatively high volume percentage, e.g., above 50% and up to 90% by volume. The provision of a relatively high density final product, which is formed in situ at relatively low pressures and temperatures and which is temperature stable to about 1,200 degrees C. offers advantages not heretofore obtained.

The metal binder material should be one which in a liquid state can wet the coating on the TSPCD and the hard ceramic powder particles. It is also preferred that the binder metal have good mechanical properties such as ductility and strength. Typical such binders are copper or nickel based brazing alloys, copper-tin-manganese-nickel alloys, the latter being the preferred binder material.

The processing above described, as already noted may be used to form a wide variety of products which are characterized as having a strong chemical bond between the coating and the TSPCD and between the coating and the supporting structure. It is this chemical bonding which provides the significant strength over that which can be achieved by merely a mechanical gripping of the TSPCD. The advantage of this invention is that the TSPCD elements or element are effectively locked in or on a support structure to provide a TSPCD cutting element as contrasted to the prior temperature sensitive supported TSPCD elements commercially available.

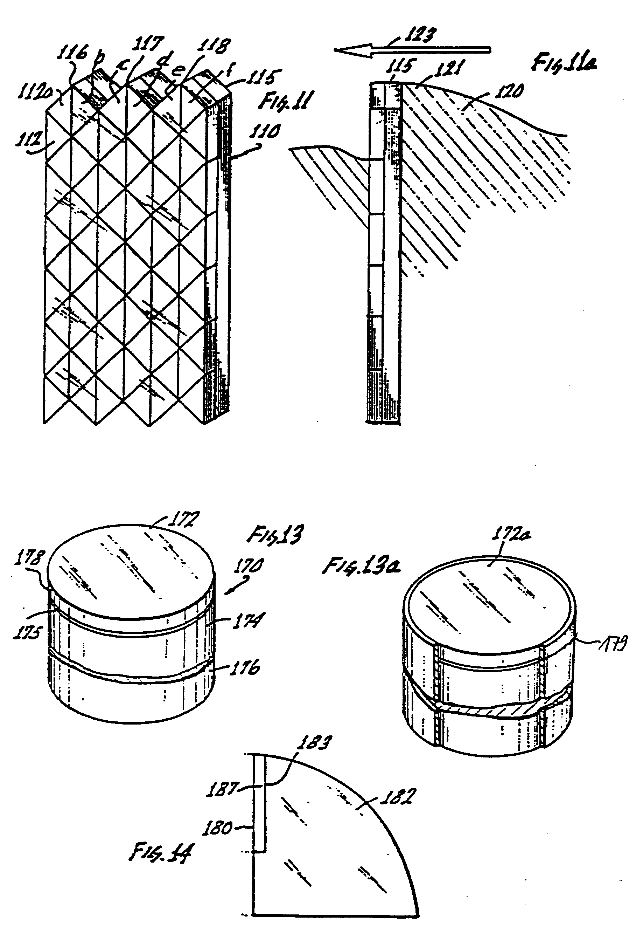

Referring to the drawings which illustrate preferred forms of the present invention, Figure 2 illustrates a TSPCD product 30 which includes six (6) of initially separate TSPCD elements 31a to 31f of generally triangular shape. The TSPCD elements may be bonded together in or on a support structure 32, see also Figure 3, which may be an infiltrated or sintered powdered material. The support structure may be of various dimensions and of various axial lengths, as indicated by the break line 33.

As seen in Figures 2 and 3, the TSPCD elements include at least one side face 34a which may be positioned adjacent to but spaced a small distance from the side face 34b of the adjacent TSPCD element. The distance between adjacent TSPCD elements, referred to as the gap and illustrated as 35 in Figure 3, may be of the dimensions previously indicated.

Referring to Figure 4, for example, the gap 35 is illustrated with reference to its condition after cold isostatic pressing and before further processing. Each of the TSPCD elements 37 and 38 includes the coating 37a and 38a, respectively, the TSPCD elements being spaced from each other by the gap width. Between the coated surfaces is the powder material 40 such that the gap is TSPCD face-coating-powder-coating-TSPCD face. In subsequent processing, a strong chemical bond is formed from the TSPCD face through the coating, through the powder, through the coating of the adjacent TSPCD face and to the adjacent TSPCD.

Again referring to Figures 2 and 3, in the resulting TSPCD product 30, essentially all surfaces of the TSPCD elements, save one, are in contact with bonded support material, i.e., there is material on the bottom face 41 and peripherally around the outer faces, as indicated at 42 and in the gap 35, while one face 44 is exposed. This form provides the optimum bonding of the TSPCD elements together. This product may be assembled to a bit body during infiltration of the bit to form the matrix bit body.

The form or TSPCD product in accordance with this invention shown diagrammatically in Figure 5 illustrates that not all of the faces need be fully in contact and bonded to the support element. Here a triangular TSPCD element 50 includes side faces 50a, 50b and 50c which are only partially beneath the top surface 52 of the support structure 53 shown as triangular for purposes of illustration. Due to the strong chemical bonding between the TSPCD and the support structure, it is possible to expose a substantial portion of the large flat face 50d of the TSPCD while the body of the TSPCD is substantially above the support body. Thus, for example it is possible in accordance with this invention to form large bearings from smaller TSPCD elements.

Referring to Figures 6 and 6a, for example, a TSPCD product 60 is illustrated which may be used as a bearing or the like. This form of product also illustrates that TSPCD elements of different geometrical shapes may be used to form a useful TSPCD products. In this form, TSPCD elements 61 and 63 are half circular disks while TSPCD element 64 is square, although it may also be rectangular. The TSPCD elements are bonded to a support 65 of metal powder processed as already described with gaps 66a and 66b between adjacent elements. As illustrated the gaps, however, are not filled with matrix carrier material thus effectively providing channels between the spaced and facing exposed side faces 61f-64f and 64g-63f, the elements 61, 63 and 64 being positioned such that a substantial portion is exposed as noted with reference to Figure 5. When used as a bearing, the channels may provide for flow of cooling or lubricating fluid, if desired. If channels are not needed, the gaps may be substantially filled as illustrated in Figure 3, i.e., the surface of the support is even with the top surface of the TSPCD elements.

Not all of the side faces need be in contact with and bonded to the support material. Thus, for example as illustrated in Figure 7, a single point dressing tool 70 is shown which includes a TSPCD element 72 mounted on and bonded to a support 74 such that one face 72a is fully contacted by the support material which effectively forms a shoulder 76 to the rear of the element 72. Faces 72b and 72c are fully exposed while the bottom surface is bonded to the support. While element 72 is indicated as triangular, it may be other shapes such as square, rectangular, semi-circular or circular, for example.

The ability to bond a TSPCD element firmly in a support structure permits the fabrication of unique cutting and abrading products. For example, Figures 8 and 8a illustrate an improved saw blade segment 80 composed of a plurality of TSPCD elements 81a through 81k, bonded to a support structure 83. In the form illustrated, the TSPCD elements are circular in shape although other geometrical shapes may be used. Circular shapes, however, have the advantage of providing a relatively large surface area for firmly bonding the elements to the support structure. The diameter of the elements may be in the range of one millimeter or larger depending upon the use of the segment. In prior segments, they were either impregnated with diamond dust or used spherical natural diamonds. In the either case as the supporting matrix carrier was worn due to use, the diamond material was lost due to loss of supporting structure. This problem is largely overcome by the present invention since the TSPCD elements are firmly chemically bonded over a comparatively large surface area.

The TSPCD elements are preferably arranged in a redundant pattern such that elements 81e through 81g are to the rear and in the space between the adjacent lead elements 81a-81d, with elements 81h-81k oriented in the spaces between 81e-81g. Thus, for example if the thickness of the elements is equal to or greater than the gap dimension between adjacent side-by-side elements 81a-81d, the entire face of the cut in the workpiece is traversed by at least one cutter. The redundancy may be two or more, that is, additional elements may be arranged to provide added redundancy as may be needed.

As illustrated in Figure 8a, each element 81a-81k includes an exposed arcuate cutting face, for example 81aa, 81ee and 81hh extending above the surface 84 of the support 83, with a substantial portion of each element firmly and chemically bonded to the support. As the segment wears in use, the elements are retained to a much greater degree than the prior diamond cutting segments. While circular elements have been described, one may use a half-circle or quarter-round TSPCD elements, preferably mounted such that the curved peripheral surface is exposed to form the leading cutting edge. Such materials are commercially available or may be cut off a cylindrical TSPCD part to the desired thickness.

The ability to anchor and firmly bond a TSPCD element to a support structure permits the fabrication of a wide variety of cutting and abrading tools. It also permits the fabrication of products that are other than abrading or cutting tools, such as bearings, as described and, for example, a lead bonding tool. Heretofore, lead bonding tools have been made of a single crystal diamond cut to a precise shape and dimension with a flat working face. Typically these tools are used to bond lead elements to solid state chips and the like by being brought into contact with the chip and bonding the leads in a precise and exact location to the chip through heat and pressure. Normally the temperature is about 500 degrees C. and natural diamonds are able to withstand this temperature. However, it is difficult to support these natural diamonds in a support structure and if they move even slightly relative to the support structure, problems may be encountered in their use since the bonding operation is a precision operation. In accordance with this invention, an improved lead bonding tool is provided which is firmly anchored in a support structure and which is temperature stable.

Referring to Figure 9 an improved lead bonding tool 90 is illustrated and includes a TSPCD element 92 bonded to a support structure 94, the latter being metallic and including an aperture 95 therein for a heater and including a shank 96 for mounting in the lead bonding machine. The support usually includes a cylindrical section 97 having a frusto-conical end 98 with the element 92 mounted at the tip of the end 98. The element 92 includes a working face 99 which projects beyond the end 98 and which is of a precise flatness and face dimension, i.e., length and width. The face contour may be square or rectangular, or any other shape, as may be desired. Heat may be applied to heat the element in a conventional manner normally used to heat the lead bonding tool. In use the tool is subject to vibration and heat which requires that the element be firmly and accurately mounted and maintained in that accurate mounting during use. By the present invention, the TSPCD element 92 may be chemically bonded to the support structure which may be the support 94 or a separate insert to be received in the support. The advantage of this invention is that a TSPCD element may be used which may be relatively easily affixed to a support structure.

Thus, for example, the element 92 may be shaped to the precise required length and width dimensions and in situ bonded to a support structure. If the support structure is the support 94, the face of the TSPCD may be precision ground to the desired flatness such that the plane of the face 99 is referenced to the support structure, an operation which is difficult to achieve with single crystal diamonds. It is also possible to form a lead bonding tool by formation of a TSPCD support structure which is then assembled to the body 94, rather than forming the entire assembly as herein described.

One aspect of this invention is the ability to form a TSPCD product of virtually any shape or size from smaller TSPCD elements. The TSPCD product illustrated in Figure 10 is an example. There a large TSPCD product 100 is composed of a multiplicity of triangular TSPCD elements 101 in a TSPCD part which is essentially circular in overall shape, although it may be of any shape. In the form illustrated, there is a surrounding portion 105 of tungsten carbide, for example. The tungsten carbide may be of 70 volume percent tungsten carbide By way of example, the part may be 50 mm in diameter and is useful as a cutter for oil and gas drill and core bits.

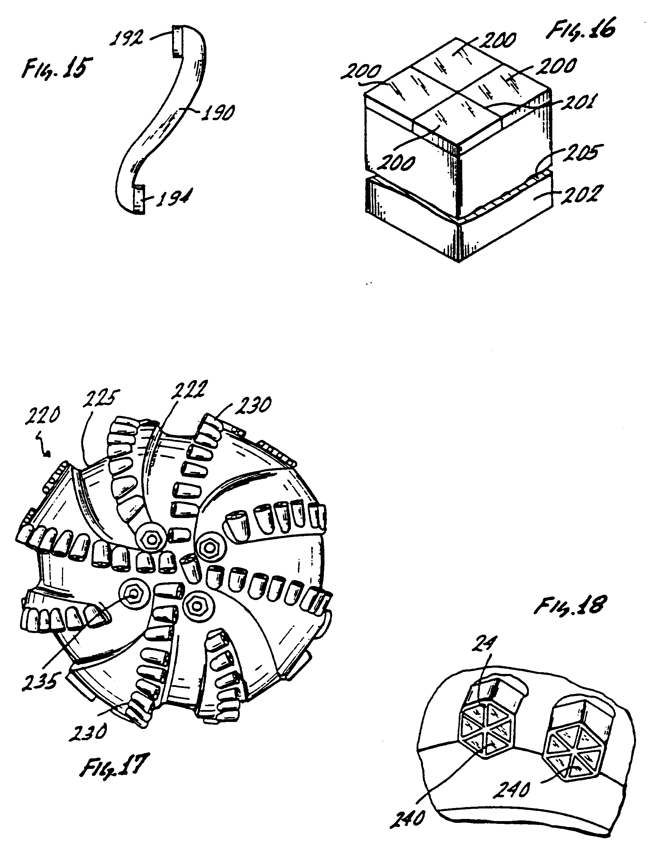

Figure 11 illustrates another TSPCD product 110 in accordance with this invention composed of a plurality of TSPCD elements 112 illustrated as being triangular pieces which may be for instance 3 per carat or 1 per carat. The elements 112 are bonded together and to a support 115 such as tungsten carbide by any of the methods already described, so as to form a unitary structure in which the previously separate elements are chemically bonded together and to the tungsten carbide and to the tungsten carbide backing 115. It is understood that the backing may be any of the carbide materials already described.

The form of the invention illustrated in Figure 11 illustrates the variety of TSPCD products that may be fabricated in accordance with this invention. This particular structure provides for a plurality of cutting elements 112a and b, 112c and d, and 112e and f, which form pairs which together provide a series of cutting points 116, 117 and 118. In use in a bit, as shown in Figure 11a, the cutting product 110 may be mounted directly into the body matrix during body matrix infiltration or formation. In this form, there is a back support 121 provided which contacts the backing 115, the cutting direction being indicated by the arrow 123. The tungsten carbide backing 115 provides for increased impact strength.

The cutting product 110 is exposed such that at least one top row of elements 112a-112f are essentially fully exposed. In use as the top row of cutters wear, new cutting surfaces are regenerated from the cutter elements below the top row. This product also illustrates the fact that adjacent elements include at least one side surface which is located adjacent to the adjoining piece, the spacing being as already described.

To improve the cutter performance in terms of regenerating cutter edges and points, the amount of matrix carrier between adjacent TSPCD elements may be reduced in cross-sectional thickness in order to provide controlled weakness planes in the cutter structure thereby providing for fracture of the cutter along predetermined planes of fracture. In this way as the loading on a cutter region increases, the cutter is broken out of the support to provide a new cutter element. Since earth boring, in part, relies upon a kerfing type of cutting, the formation of an uneven overall cutting surface generally tends to improve the cutting action in certain types of formations.

As already noted, the products of the present invention are much stronger than products previously described as mechanical mosaic structures. Referring to Figures 12a to 12d, Figure 12a illustrates diagrammatically a three point bending test in which loads are applied to a part 130 in one direction as indicated by the arrows 131 and 132 and a load is applied in another direction as indicated by the arrow 133. The force necessary to bring about fracture through the joint 135 or through the joined parts 136 is measured and expressed in terms of kg/mm² (pounds per square inch) to failure.

Figure 12b illustrates a TSPCD part 140 in accordance with this invention made up of triangular TSPCD elements 141 joined together as indicated at the joints 142 by the methods already described. The part 140 was processed by sintering tungsten coated 3 per carat TSPCD elements with tungsten powder which had been compressed to a volume percentage of 90%. In the three point test, the failure mode was in the joint between adjacent elements, as indicated at 145. The load to failure was 14.77 kg/mm² (21,000 psi).

Figure 12c is similar in structure to that of Figure 12b, but the part 150 was formed from tungsten coated 3 per carat TSPCD elements which were liquid state infiltrated with tungsten carbide using a copper binder, as described, and processed as described. In the three point test, the failure mode was through the TSPCD as indicated at 155 and the load to failure was 18.28 kg/mm² (26,000 psi).

Figure 12d illustrates a mechanical mosaic structure 160 which is essentially the same as 150, but in which the TSPCD elements were not coated and in which the part was processed using conventional infiltration techniques with the same tungsten carbide and binder used to form the part 150. In the three point test, the failure was through the joint, as indicated at 165, and the load to failure was zero psi.

The relatively high strength of the bonded joint between the TSPCD and the supporting structure permits wide variation in the types of products in accordance with this invention. One of the advantages is the ability to provide a TSPCD element which is securely bonded to a support structure. Referring to Figure 13, there is illustrated a product 170 which includes a TSPCD element 172 firmly secured to a tungsten carbide support element 174. While the product 170 superficially resembles the appearance of a STRATAPAX® brand cutter, it is vastly different.

More specifically, the TSPCD element may be a product available commercially as SYNDAX®, a TSPCD material in the form of a thin one-piece disc. The dimensions of the disc 172 may vary widely from a diameter of 2 to 3 mm to as much as 50mm or more. The disc 172 is firmly chemically bonded to the support element 174 through the chemical bond formed through the coating applied to the disc 172 which in turn is bonded to the infiltrated or sintered material 175.

The support 174 may be separately formed and the disc 172 and the material 175 may be assembled and processed as described. The result is the chemical bonding of a TSPCD to a preformed support. The advantage is that the length, diameter and shape of the support is not limited by the size of the high pressure high temperature presses normally used to form STRATAPAX® types of products. The cost for making a product as shown and described in Figure 13 is less than that for the temperature sensitive product, but the advantage is the ability to form the support of essentially any length, as indicated by the break line 176, without requiring larger presses. This form of product has the advantage of being temperature stable up to about 1,200 degrees C. and may thus be infiltrated simultaneously with the formation of a supporting matrix, for example a matrix body for a drill bit. Alternatively, the product may be brazed into the bit body by the use of higher temperature brazing materials than have been heretofore used. It is also understood that the coated diamond may be brazed to a suitable support such as cemented tungsten carbide, and the like, since the braze joint is between the coating on the diamond and the support element. Since the diamond is temperature stable, higher melting point brazing alloys may be used as compared to those alloys which are used with diamond product which are not temperature stable, as herein defined.

As illustrated in Figure 13, the side surface 178 of the disc is free of sintered or infiltrated material. In the form illustrated in Figure 13a, the sintered or infiltrated material may cover the sides of the disc 172a, as indicated at 179 for added strength.

Figure 14 illustrates a structure in which one or more TSPCD elements 180 are affixed to a supporting body such that the back side 183 of the elements are in contact with the support body while the side faces are adjacent to each other or include a fully exposed side face, as indicated at 187. In this particular case, the support body may be a saw blade segment or a preformed and preshaped cutter for an earth boring bit. While the configuration of the product illustrated in this figure may appear similar to some of the illustrations of United States Patent 3,938,599 issued to Horn, there are significant differences. Unlike the Horn structure, that of the present invention is chemically bonded to the supporting matrix carrier and is far stronger than a mere mechanical bond as described in the referenced patent, see also the data previously described. This strong bonding allows for the provision of a variety of products.

Thus, for example, Figure 15 illustrates a twist drill 190 having segments 192 and 194 mounted thereon. Segments 192 and 194 may be a TSPCD product in accordance with this invention containing one or more TSPCD elements in a support structure. The drill bit may be of a 6,35 mm (1/4 inch) or larger size.

Figure 16 illustrates a form of the invention similar to that of Figure 13 wherein the TSPCD elements 200 are square in shape, although rectangular shapes and mixtures of geometrical shapes may be used. The TSPCD elements are bonded to each other through the material 201 and to the base 202, as described. The base may be of a shape other than square and may be of any length as indicated by the break line 205.

Figures 17 and 18 illustrate a drill bit 220 in accordance with the present invention. The bit includes a body 222, preferably of matrix material such as carbide, having a plurality of waterways 225 associated with a plurality of blades 230. It is to be understood that in referring to the bit body as a matrix body, the matrix material of the bit body may be a relatively thin coating on a suitable support structure. The bit also includes nozzles 235 for flow of fluid from the interior of the body to the waterways to cool and clean the bit.

As shown in Figure 18, each blade includes a plurality of cutters 240 having a configuration as illustrated in Figure 2, for example. The cutters 240 are mounted in the matrix body during infiltration of the body thus eliminating the need to braze the individual cutters into the bit body. As mentioned. each of the cutters, by virtue of the production thereof is temperature stable to 1,200 degrees C. It is understood that other cutter configurations in accordance with this invention may be used, for example that illustrated in Figure 10 or in Figure 13, for example. It is also possible to provide cutters of selected geometry, e.g., quarter circles, half circles and the like. It is also possible to have temperature stable cutters which are larger in diameter than about 14mm, the usual maximum size for the STRATAPAX® brand products.

Drill bit or core bit bodies may be of any of a number of types, as is known in the art. Thus, for example, stepped bit designs may be used with a significant cutter exposure, to mention only one variant. The ability to fabricate cutters to different desired geometries as may be needed for effective cutting action in various formations is now possible in accordance with this invention.

One of the features of the present invention is the fact that a wide variety of shapes and sizes is possible in the provision of a temperature stable PCD assembly through the use of processing steps that do not involve the high temperature and high pressure regime used in the synthesis of PCD materials.

Typical processing of TSPCD elements in accordance with this invention is set forth in the following specific example, by way of illustration.

Triangular temperature stable TSPCD elements of a size of 3 per carat were coated with tungsten metal to a thickness of about 6 »m. The powder used to form the matrix carrier was tungsten carbide powder of 3 to 5 »m particle size. About 1,000 grams of this powder were completely and thoroughly mixed with a solution of 200 ml of hexane in which 20 grams of paraffin and mineral oil had been dissolved. The resultant mixture was heated to between 80 to 100 degrees C for 43 minutes to evaporate the hexane completely. The processed powder was then ball milled, as described, for thirty minutes to break up the flocculated powder and then screened through a 74 »m (200 mesh) screen.

The tungsten coated TSPCD elements were arranged in a suitable hexagonal die and 4.5 grams of the processed tungsten carbide powder was placed in the mold to fill the space between the TSPCD elements and to cover them. The resulting assembly was then cold pressed at 14.06 kg/mm² (20,000 psi) to form a hexagonal preform.

The hexagonal preform was then loaded into a rubber mold which was then evacuated and sealed and then isostatically pressed at 20.39 kg/mm² (29,000 psi). The resulting product was then ground to specific size.

The isostatically processed hexagonal product was the placed on a crucible with 2.6 grams of a copper based alloy (Cu-Sn-Mn-Ni) on the powder side. The preform was then heated in a vacuum furnace (1,33·10⁻⁵ mbar (10 to the minus 5 torr)) at the rate of 5 degrees C per minute up to 400 degrees C for one hour and then at 10 degrees C per minute to a temperature of 1160 degrees C for one hours for infiltration, later followed by cooling.

Heating at a temperature over 1100 degrees C. for one hour is important because it is at this stage that tungsten carbide formation takes place. Typically the tungsten carbide layer thus formed is about 3 »m thick.

If the preform is heated quickly to 1,000 degrees C. and held for 1.5 hours, the formed tungsten carbide layer is about 0.3 »m thick. Heating to the carbide forming temperature at the rate of 10 degree C. per minute may also be used.

After the thermal cycle, the finished product is surface ground to a thickness of about 0.8 cm (0.315 of an inch) and may be used.

As a variant, cemented tungsten carbide grit (94% by weight of tungsten carbide bonded with 6% by weight of cobalt, a commercially available material) of 37 »m (400 mesh) size was mixed with a solution of 2% by weight paraffin in hexane.

It is within the scope of this invention to form the isostatically pressed part and then process that part so that it is simulataneously bonded to a supporting structure such as a matrix bit body or other support structure while effecting conversion to the carbide layer described. For example, carburized tungsten powder in the nominal size range of 3 to 5 »m was ball milled with 1% by weight of nickel powder -44 »m (-325 mesh) for one hour. The milled powder mixture was then mixed with a solution of 2% by weight of paraffin wax in hexane.

The mixture was dried by heating and then the processed powders were used with triangular TSPCD elements, coated as already described, to form a much larger assembly, as described. The larger assembly was cold axially pressed and then isostatically pressed as described. The resulting product was a "green" hexagonal cutter as shown in Figure 2. The green assembly was then heated to burn off the organic material and held at a temperature of 1,000 degrees C. for one hour.

Thereafter, the processed green assembly, sufficiently strong to be handled was assembled to a matrix powder material in a mold, e.g. the matrix bit forming operation, and the matrix infiltrated at 1,200 degrees C. During the matrix infiltration, the green assembly was bonded to the matrix and the coating was formed into the carbide layer. In this processing there was a strong bond between the metal binder of the matrix and that in the green assembly and between the coating, powder and matrix supporting structure. Essentially the same processing may be used to form other products already described in or on a matrix carrier support element.

In those cases where it is contemplated that the product of the present invention is to be assembled to a matrix material supporting structure, such as a matrix body drill or core bit, it is desirable to coat the product of this invention with a carbide forming material, as already described. Such processing has the advantage of of providing a coating, of the thickness described, which may in turn form a carbide layer for effective bonding to the matrix carrier in which the part is to be mounted. The carbide layer may be formed by a separate preheating operation or by controlled heating during body matrix formation.

The abrasive character of the products in accordance with the present invention may be enhanced somewhat by adding to the powder materials relatively small particles of diamond or TSPCD material in the form of particles having the approximate size of the powders used. The volume percent of such diamond powders may be as high as 40% and the resulting material is processed as already described with the bonding as already described. The starting diamond material is preferably synthetic polycrystalline diamond which is temperature stable although natrual diamond material may also be used in some instances.

## Claims

1. A temperature stable synthetic polycrystalline diamond (TSPCD) product, having a temperature stability up to about 1200 °C comprising
at least one TSPCD diamond piece of a predetermined geometrical shape and which is temperature stable up to about 1200 °C,
at least one surface of each said diamond piece being covered with an essentially uniform coating of a metal which is a carbide former, obtained by chemical vapour deposition (CVD),
said coating having a thickness between 1 and 10 »m and
said coating adjacent to its portion contacting said diamond piece including a thin carbide layer establishing a chemical bond between the diamond and said coating,
a metal matrix carrier which metal matrix carrier is in contact with at least a portion of said diamond piece bearing said coating,
the portion of the metal matrix carrier contacting said coating establishing a metallurgical chemical bond between said metal matrix carrier and said coating.

2. The diamond product of claim 1 in which said coating includes at least one metal selected from the metals of Group IVA, VA, VIA, VIIA and alloys and mixtures thereof.

3. The diamond product of claim 2 wherein the metal of said coating is tungsten.

4. The diamond product of claim 1 wherein said metal matrix carrier is a sintered metal selected from the groups consisting of tungsten, nickel, tantalum, molybdenum, cobalt and sintered tungsten body infiltrated by a copper based alloy.

5. The diamond product of claim 1 wherein said metal matrix carrier is selected from the group consisting of tungsten metal powder and the carbides of tungsten, titanium, tantalum and molybdenum.

6. The diamond product of claim 1 wherein said metal matrix carrier includes a carbide and a binder, the carbide being selected from the group consisting of carbides of tungsten, chromium niobium, titanium, tantalum and molybdenum.

7. The diamond product of claim 1 wherein said product includes a plurality of initially separate temperature stable diamond pieces arranged in a predetermined pattern and including opposed surface portions forming a small gap therebetween and matrix carrier being located in said gap and contacting at least a portion of the surface porions of said temperature stable diamond elements.

8. The diamond product of claim 4 wherein at least some of said temperature stable diamond elements are generally triangular in shape.

9. The diamond product of claim 7 wherein said gap is between 0.1524 mm and 12.7 mm, preferably between 0.1524 mm and 0.76 mm, (6 and 500 mils, preferably between 6 and 30 mils).

10. The diamond product of claim 5 wherein said metal matrix carrier is a tungsten metal powder coated with nickel.

11. The diamond product of claim 1 wherein said product is generally circular in shape and said temperature stable diamond is generally circular in shape.

12. The diamond product of claim 11 wherein said diamond piece is composed of at least 60 % by volume of diamond aggregates.

13. The diamond product of claims 1, 2, 5 and 12 in which said product is a saw blade segment or a bearing element, or a dressing tool or a component of a twist drill or a lead bonding tool or a single point dressing tool or a cutter adapted to be mounted on an earth boring bit.

14. The diamond product of claim 13 in which said product includes more than one initially separate temperature stable diamond elements.

15. The diamond product of claim 1 wherein the metal of said coating is tungsten and wherein said matrix carrier is tungsten carbide forming a backing integral with said diamond piece.

16. A method of forming a temperature stable synthetic polycristalline diamond (TSPCD) product having a temperature stability of up to about 1200 °C from at least one initially separate temperature stable diamond element of a predetermined geometric shape, comprising the steps of:
coating at least a portion of the surface of said temperature stable diamond element with a metallic carbide former,
said coating being of a thickness of 1 to 10 »m,
assembling with said coated temperature stable diamond element a matrix carrier powder such that the powder contacts at least the coated surface of said temperature stable diamond,
cold pressing said assembled powder and said coated temperature stable diamond to compact said powder to a volume density of more than 40% to form a cold pressed intermediate,
cold isostatic pressing said cold pressed intermediate to compact said powder to provide an isostatic pressed intermediate whereby the pressing is done such that the powder in the matrix carrier is compressed to a volume density above 50%,
heating said isostatic pressed intermediate at an elevated temperature and in a controlled atmosphere for a period of time sufficient to form a thin carbide layer at the diamond coating interface establishing a chemical bond between the coating on the surface of said temperature stable diamond element and said diamond element and a metallurgical chemical bond between said coating and the matrix carrier material in contact with said coating.

17. A method as set forth in claim 16 wherein heating of said isostatic pressed intermediate includes heating at a rate not greater than about 10 °C per minute in the range of between about 900 °C and 1100 °C to effect conversion of a portion of said carbide forming coating to a carbide.

18. A method as set forth in claim 16 wherein said matrix carrier powder is a mixture of a carbide and a binder therefor.

19. A method as Set forth in claim 16 wherein said assembly step includes the assembly of a plurality of coated temperature stable diamond elements in a predetermined configuration.

20. A method as set forth in claim 19 wherein said elements are assembled such that there is a gap between adjacent elements.

21. A method as set forth in claim 19 wherein said elements are assembled such that at least some of them are in butting relation.

22. A method as set forth in claim 16 wherein said metallic carbide former is a metal selected from the group consisting of the metals of Group IVA, VA, VIA, VII and alloys and mixtures thereof.

23. A method as set forth in claim 16 further including the step of assembling said isostatic pressed intermediate to a powdered support material, and
said heating operation including heating the isostatic pressed intermediate and said powdered material to effect the chemical bonding and to effect formation of said powdered material into a support for said temperature stable synthetic diamond element.

24. The method of claim 16 wherein the cold pressing is effected to compact said powder to a volume density of about 50% and said cold isostatic pressing is effected to compact said powder to a volume density of about 60 to 65%.

## Patentansprüche

1. Temperaturstabiles, synthetisches, polykristallines Diamant- (TSPCD) Produkt mit einer Temperaturstabilität bis etwa 1200°C, umfassend
wenigstens ein TSPCD Diamantstück einer vorbestimmten geometrischen Gestalt, welches bis etwa 1200°C temperaturstabil ist,
wobei wenigstens eine Oberfläche eines jeden Diamantstückes mit einer im wesentlichen gleichförmigen Beschichtung aus einem Metall, welches ein Carbidbildner ist und durch chemisches Aufdampfen (CVD) erhalten wird, überzogen ist,
wobei die Beschichtung eine Dicke zwischen 1 und 10 »m aufweist, und
die Beschichtung benachbart zu ihrem mit dem eine dünne Carbidschicht enthaltenden Diamantstück in Kontakt stehenden Abschnitt eine chemische Bindung zwischen dem Diamanten und der Beschichtung schafft,
einen Metallmatrixträger, wobei der Metallmatrixtrager mit wenigstens einem Abschnitt des die Beschichtung tragenden Diamantstückes in Kontakt ist,
wobei der mit der Beschichtung in Kontakt stehende Metallmatrixträger eine metallurgische chemische Bindung zwischen dem Metallmatrixträger und der Beschichtung schafft.

2. Diamantprodukt nach Anspruch 1, in welchem die Beschichtung wenigstens ein Metall ausgewählt aus den Metallen der Gruppe IVA, VA, VIA, VIIA und Legierungen und Mischungen von diesen, enthält.

3. Diamantprodukt nach Anspruch 2, wobei das Metall der Beschichtung Wolfram ist.

4. Diamantprodukt nach Anspruch 1, wobei der Metallmatrixträger ein gesintertes Metall ist, ausgewählt aus den Gruppen bestehend aus Wolfram, Nickel, Tantal, Molybdän, Kobalt und gesintertem Wolframkörper, infiltriert von einer Legierung auf Kupferbasis.

5. Diamantprodukt nach Anspruch 1, wobei der Metallmatrixträger ausgewählt ist aus der Gruppe bestehend aus Wolframmetallpulver und den Carbiden von Wolfram, Titan, Tantal und Molybdän.

6. Diamantprodukt nach Anspruch 1, wobei der Metallmatrixträger ein Carbid und ein Bindemittel enthält, wobei das Carbid ausgewählt ist aus der Gruppe bestehend aus Carbiden von Wolfram, Chrom, Niob, Titan, Tantal und Molybdän.

7. Diamantprodukt nach Anspruch 1, wobei das Produkt eine Vielzahl zunächst einzelner temperaturstabiler Diamantstücke enthält, die in einem vorbestimmten Muster angeordnet sind und einander gegenüberliegende Flächenabschnitte enthalten, die einen schmalen Spalt zwischen ihnen bilden, und einen Matrixträger enthält, welcher in den Spalten angeordnet ist und mit wenigstens einem Teil der Flächenabschnitte der temperaturstabilen Diamantelemente in Kontakt steht.

8. Diamantprodukt nach Anspruch 4, wobei wenigstens einige der temperaturstabilen Diamantelemente im allgemeinen dreieckige Gestalt haben.

9. Diamantprodukt nach Anspruch 7, wobei der Spalt zwischen 0,1524 mm und 12,7 mm, vorzugsweise zwischen 0,1524 mm und 0,76 mm (6 und 500 mils, vorzugsweise zwischen 6 und 30 mils) beträgt.

10. Diamantprodukt nach Anspruch 5, wobei der Metallmatrixträger ein mit Nickel beschichtetes Wolframmetallpulver ist.

11. Diamantprodukt nach Anspruch 1, wobei das Produkt im allgemeinen kreisförmig ist und der temperaturstabile Diamant im allgemeinen kreisförmig ist.

12. Diamantprodukt nach Anspruch 11, wobei das Diamantstück aus wenigstens 60 Vol.-% Diamantanteilen besteht.

13. Diamantprodukt nach den Ansprüchen 1, 2, 5 und 12, in welchem das Produkt ein Sägeblattabschnitt oder ein Lagerelement oder ein Abrichtwerkzeug oder ein Bauteil eines Spiralbohrers oder ein Anschlußdraht-Bondwerkzeug oder ein Spitzabrichtwerkzeug oder ein Schneidwerkzeug, der eingerichtet ist, an einer Erdbohrschneide befestigt zu werden, ist.

14. Diamantprodukt nach Anspruch 13, in welchem das Produkt mehr als eines von zunächst einzelnen temperaturstabilen Diamantelementen enthält.

15. Diamantprodukt nach Anspruch 1, wobei das Metall der Beschichtung Wolfram ist und wobei der Matrixträger Wolframcarbid ist, der eine Trägerschicht einstückig mit dem Diamantstück bildet.

16. Verfahren zur Herstellung eines temperaturstabilen synthetischen polykristallinen (TSPCD) Produktes mit einer Temperaturstabilität von bis etwa 1200°C aus wenigstens einem, zunächst einzeln vorliegenden temperaturstabilen Element einer vorbestimmten geometrischen Form, umfassend die Schritte:
Beschichten wenigstens eines Abschnittes der Oberfläche des temperaturstabilen Diamantelementes mit einem metallischen Carbidbildner,
wobei die Beschichtung eine Dicke von 1 bis 10 »m aufweist,
Zusammenführen eines Matrixträgerpulvers mit dem beschichteten temperaturstabilen Diamantelement derart, daß das Pulver wenigstens die beschichtete Oberfläche des temperaturstabilen Diamanten berührt,
Kaltpressen des zusammengeführten Pulvers und des beschichteten temperaturstabilen Diamanten, um das Pulver auf eine Volumendichte von mehr als 40% zu verfestigen zur Bildung eines kaltgepreßten Zwischenproduktes,
Isostatisches Kaltpressen des kaltgepreßten Zwischenproduktes zum Verfestigen des Pulvers, um ein isostatisch gepreßtes Zwischenprodukt zu schaffen, wobei das Pressen so durchgeführt wird, daß das Pulver in dem Matrixträger auf eine Volumendichte von über 50% verdichtet wird,
Erhitzen des isostatisch gepreßten Zwischenproduktes auf eine erhöhte Temperatur und in einer kontrollierten Atmosphäre über eine Zeitspanne, geeignet zur Bildung einer dünnen Carbidschicht an der Grenzfläche der Diamantbeschichtung zur Herstellung einer chemischen Bindung zwischen der Beschichtung an der Oberfläche des temperaturstabilen Diamantelementes und dem Diamantelement, und einer metallurgischen chemischen Bindung zwischen der Beschichtung und dem mit der Beschichtung in Kontakt stehenden Matrixträgermaterial.

17. Verfahren nach Anspruch 16, wobei das Erhitzen des isostatisch gepreßten Zwischenproduktes ein Erhitzen mit einer Rate nicht über 10°C pro Minute in dem Bereich zwischen etwa 900°C und 1100°C enthält, um eine Umwandlung eines Teiles der carbidbildenden Schicht in ein Carbid herbeizuführen.

18. Verfahren nach Anspruch 16, wobei das Matrixträgerpulver eine Mischung aus einem Carbid und einem Bindemittel für dieses ist.

19. Verfahren nach Anspruch 16, wobei der Fertigungsschritt die Gruppierung einer Vielzahl beschichteter temperaturstabiler Diamantelemente in einer vorbestimmten Anordnung enthält.

20. Verfahren nach Anspruch 19, wobei die Elemente derart angeordnet sind, daß ein Spalt zwischen benachbarten Elementen ist.

21. Verfahren nach Anspruch 19, wobei die Elemente derart angeordnet sind, daß wenigstens einige von ihnen aneinanderstoßen.

22. Verfahren nach Anspruch 16, wobei der metallische Carbidbildner ein Metall ist, ausgewählt aus der Gruppe bestehend aus den Metallen der Gruppe IVA, VA, VIA, VII und Legierungen und Mischungen von diesen.

23. Verfahren nach Anspruch 16, weiters enthaltend den Schritt der Zusammenführung des isostatisch gepreßten Zwischenproduktes mit einem pulverisierten Trägermaterial, und
den Erhitzungsvorgang, enthaltend das Erhitzen des isostatisch gepreßten Zwischenproduktes und des pulverisierten Materials, um die chemische Bindung zu bewirken und um die Bildung des pulverisierten Materials zu einem Träger für das temperaturstabile synthetische Diamantelement zu bewirken.

24. Verfahren nach Anspruch 16, wobei das Kaltpressen zum Verdichten des Pulvers auf eine Volumendichte von etwa 50%, und das isostatische Kaltpressen zum Verdichten des Pulvers auf eine Volumendichte von etwa 60 bis 65% eingesetzt wird.

## Revendications

1. Produit en diamant polycristallin, synthétique, stable en température (en abrégé PDPST), ayant une stabilité en température qui va jusqu'à 1200°C environ, comprenant
au moins une pièce en diamant PDPST de forme géométrique prédéterminée et qui est stable en température jusqu'à 1200°C environ,
au moins une surface de chacune desdites pièces en diamant étant couverte d'un revêtement essentiellement uniforme en un métal qui est un générateur de carbure, obtenu par dépôt chimique en phase vapeur (CVD),
ledit revêtement ayant une épaisseur comprise entre 1 et 10 »m et,
ledit revêtement comprenant, au voisinage de sa portion en contact avec ladite pièce en diamant, une fine couche de carbure établissant une liaison chimique entre le diamant et ledit revêtement,
un porteur matriciel métallique qui est contact avec au moins une portion de ladite pièce en diamant supportant ledit revêtement,
la portion du porteur matriciel métallique en contact avec ledit revêtement établissant une liaison chimique métallurgique entre ledit porteur matriciel métallique et ledit revêtement.

2. Produit en diamant selon la revendication 1, dans lequel ledit revêtement comprend au moins un métal choisi parmi les métaux du groupe IVA, VA, VIA, VIIA et les alliages et mélanges de ceux-ci.

3. Produit en diamant selon la revendication 2, dans lequel le métal dudit revêtement est le tungstène.

4. Produit en diamant selon la revendication 1, dans lequel ledit porteur matriciel métallique est un métal fritté choisi dans le groupe consistant en le tungstène, le nickel, le tantale, le molybdène, le cobalt et un corps en tungstène fritté infiltré par un alliage à base de cuivre.

5. Produit en diamant selon la revendication 1, dans lequel ledit porteur matriciel métallique est choisi dans le groupe consistant en la poudre métallique de tungstène et les carbures de tungstène, de titane, de tantale et de molybdène.

6. Produit en diamant selon la revendication 1, dans lequel ledit porteur matriciel métallique comprend un carbure et un liant, le carbure étant choisi dans le groupe consistant en les carbures de tungstène, de chrome, de niobium, de titane, de tantale et de molybdène.

7. Produit en diamant selon la revendication 1, dans lequel ledit produit comprend une pluralité de pièces en diamant stables en température initialement séparées, disposées suivant un motif prédéterminé et comprenant des portions de surface opposées formant un petit interstice entre elles, un porteur matriciel étant situé dans ledit interstice et étant en contact avec au moins une partie des portions superficielles desdits éléments en diamant stables en température.

8. Produit en diamant selon la revendication 4, dans lequel au moins certains des éléments en diamant stables en température ont une forme généralement triangulaire.

9. Produit en diamant selon la revendication 7, dans lequel ledit interstice est compris entre 0,1524 mm et 12,7 mm, de préférence entre 0,1524 mm et 0,76 mm (entre 6 et 500/000 pouces, de préférence entre 6 et 3/000 pouces).

10. Produit en diamant selon la revendication 5, dans lequel ledit porteur matriciel métallique est une poudre métallique de tungstène revêtue de nickel.

11. Produit en diamant selon la revendication 1, dans lequel ledit produit a une forme généralement circulaire et ledit diamant stable en température a une forme généralement circulaire.

12. Produit en diamant selon la revendication 11, dans lequel ladite pièce en diamant est constituée d'au moins 60% en volume d'agrégats de diamant.

13. Produit en diamant selon les revendications 1, 2, 5 et 12, dans lequel ledit produit est un segment de lame de scie ou un élément de support ou un outil de dressage ou un composant de foret hélicoïdal ou un outil de connexion de fils ou un outil de dressage à pointe unique ou un outil de coupe adapté à être monté sur un mèche de forage du sol.

14. Produit en diamant selon la revendication 13, dans lequel ledit produit comprend plus d'un élément en diamant stable en température initialement séparé.

15. Produit en diamant selon la revendication 1, dans lequel le métal dudit revêtement est le tungstène et dans lequel ledit porteur matriciel est du carbure de tungstène formant un support d'une seule pièce avec ladite pièce en diamant.

16. Procédé de formation d'un produit en diamant polycristallin synthétique, stable en température (en abrégé PDPST), ayant une stabilité en température qui va jusqu'à 1200°C environ à partir d'au moins un élément en diamant stable en température initialement séparé, de forme géométrique prédéterminée, comprenant les étapes consistant à :
revêtir au moins une portion de la surface dudit élément en diamant stable en température d'un générateur de carbure métallique, ledit revêtement ayant une épaisseur de 1 à 10 »m,
assembler audit élément en diamant stable en température et revêtu, une poudre de porteur matriciel de sorte que la poudre soit en contact au moins avec la surface revêtue dudit élément en diamant stable en température,
presser à froid ladite poudre assemblée et ledit diamant stable en température et revêtu pour compacter ladite poudre jusqu'à une masse spécifique volumique supérieure à 40% pour former un produit intermédiaire pressé à froid,
appliquer un pressage isostatique à froid audit produit intermédiaire pressé à froid pour compacter ladite poudre et obtenir un produit intermédiaire pressé de façon isostatique, grâce à quoi, le pressage est effectué de telle manière que la poudre dans le porteur matriciel est comprimée jusqu'à une masse spécifique volumique supérieure à 50%,
chauffer ledit produit intermédiaire pressé de façon isostatique à une température élevée et sous une atmosphère contrôlée pendant une période de temps suffisante pour former une fine couche de carbure à l'interface du revêtement en diamant, établissant une liaison chimique entre le revêtement superficiel dudit élément en diamant stable en température et ledit élément en diamant et une liaison chimique métallurgique entre ledit revêtement et le matériau porteur matriciel en contact avec ledit revêtement.

17. Procédé selon la revendication 16, dans lequel le chauffage dudit produit intermédiaire pressé de façon isostatique comprend le chauffage à une vitesse qui n'est pas supérieure à environ 10°C/mn dans la gamme de températures comprises entre environ 900 et 1100°C pour convertir une portion dudit revêtement générateur de carbure en un carbure.

18. Procédé selon la revendication 16, dans lequel ladite poudre de porteur matriciel est un mélange d'un carbure et d'un liant pour celui-ci.

19. Procédé selon la revendication 16, dans lequel ladite étape d'assemblage comprend l'assemblage d'une pluralité d'éléments en diamant stables en température et revêtus dans une configuration prédéterminée.

20. Procédé selon la revendication 19, dans lequel lesdits éléments sont assemblés de façon à ce qu'un interstice se trouve entre des éléments adjacents.

21. Procédé selon la revendication 19, dans lequel lesdits éléments sont assemblés de telle sorte qu'au moins certains d'entre eux sont en relation de butée.

22. Procédé selon la revendication 16, dans lequel ledit générateur de carbure métallique est un métal choisi dans le groupe consistant en les métaux des groupes IVA, VA, VIA, VII et les alliages et mélanges de ceux-ci.

23. Procédé selon la revendication 16, comprenant en outre l'étape consistant à assembler ledit produit intermédiaire pressé de façon isostatique à un matériau pulvérulent formant support, et
ladite opération de chauffage comprenant le chauffage du produit intermédiaire pressé de façon isostatique et dudit matériau pulvérulent pour réaliser la liaison chimique et transformer ledit matériau pulvérulent en un support pour ledit élément en diamant synthétique, stable en température.

24. Procédé selon la revendication 16, dans lequel le pressage à froid est effectué pour compacter ladite poudre jusqu'à une masse spécifique volumique d'environ 50% et ledit pressage isostatique est effectué pour compacter ladite poudre jusqu'à une masse spécifique volumique d'environ 60 à 65%.
